# EUROPEAN PATENT APPLICATION

(11) **EP 4 258 704 A1**
(43) Date of publication of application: **11.10.2023**
(21) Application number: 23166532.4
(22) Date of filing: 04.04.2023
(51) Int. Cl.: H04W 4/029, G08B 13/14, H01R 31/06

(54) **DEVICE FOR MONITORING AND LOCATION TRACKING OF AN ELECTRONIC ASSET AND METHOD THEREOF**

(30) Priority: 05.04.2022 PT 2022117900
(71) Applicant: Wavecom - Soluções Rádio S.A., 3800-125 Aveiro (PT)
(72) Inventor: QUELHAS DA CRUZ MARTINS FERREIRA, JOSÉ MANUEL, 3800-125 AVEIRO (PT); MATOS FERREIRA, IGOR FILIPE, 3800-125 AVEIRO (PT); BRANQUINHO GOMES, ANDRÉ, 3800-125 AVEIRO (PT)
(74) Representative: Patentree

(57) **Abstract**

Device and method for monitoring and location tracking of an electronic asset (2) comprising an adapter (11) for attaching between the asset (2) and a power supply cable, said adapter (11) comprising: a presence sensor for sensing a direct physical attachment of the adapter (11) to the asset (2); a power sensor (601) to sense voltage, or current, or voltage and current for detecting if the adapter (11) is connected to a power source (4); a power circuit (301) for receiving power from the power supply cable and comprising a battery, to power the adapter (11); and a transceiver for communicating wireless with a computer server; an electronic data processor configured for: collecting data from said sensors; recording or sending a notification of the presence sensor sensing the direct physical unattachment of the adapter (11) from the asset (2).

## Description

### TECHNICAL FIELD

The present disclosure relates to an electronic asset monitoring and location tracking, namely, of medical equipment.

### BACKGROUND

Nowadays, there is a growing need for asset monitoring. In industrial scenarios, equipment/machine monitoring is needed to assess product quality, to identify possible malfunction situations, predict maintenance, etc. In hospitals, asset management teams can take advantage of asset monitoring to better assess utilization rates and address maintenance and purchasing needs. There are many other scenarios where asset monitoring is valuable, such as: construction companies, facility management, etc.

There has been along the years development of hardware to monitor power sockets. This is a possibility to evaluate consumptions of assets attached to a specific power socket. However, this monitoring does not guarantee that there is a single device being monitored, since many devices may be plugged to the same power source. Additionally, if asset moves, the power socket monitor needs to be moved accordingly and this is not practical to do.

With the constant evolution of technology, industrial and health equipment tends to be smaller over time, making it more portable and opening business opportunities for equipment rental. This happens for example in hospitals, where medical devices are sometimes rented over defined periods of time through equipment management companies. These companies rent their equipment, providing support and maintenance as a service.

This portability poses additional challenges to asset monitoring and maintenance. Besides asset operational data, there is a need to know the location of the assets to be able to rapidly solve issues and perform maintenance.

Document US2020059751A1 discloses an apparatus that powers an electronic device, such as a medical device, and sends notifications of properties of the use in order to track use of equipment, reallocate non-used medical equipment and find lost equipment. The notifications can support data regarding whether the electronics tracking device is plugged in and whether the durable medical equipment (DME) is powered on or off.

Document US2015130629A1 discloses an asset tag for monitoring both location and usage of an electronic asset. It may determine usage of the asset by monitoring one or more of an on/off state of the asset, a temperature of the asset, a current draw of the asset, and/or movement, for example, via measuring an acceleration using an accelerometer. The asset tag may include a socket configured to receive a first plug, wherein the first plug comprises a plug of the electronic asset; a second plug electrically coupled to the socket, wherein the second plug is configured to transmit current to the socket; and a power source configured to power the usage detector.

Document US2016112828A1 discloses a power cord for medical equipment which is movable to and from various locations. The power cord has integral location tracking hardware installed on or in the cord allowing instantaneous location information for any device the cord is connected to.

There is thus a need in the prior art for a more practical, effective, and reasonably costed solution.

These facts are disclosed in order to illustrate the technical problem addressed by the present disclosure.

### GENERAL DESCRIPTION

The present document discloses a device for monitoring and location tracking of an electronic asset comprising an adapter for attaching between the asset and a power supply cable, said adapter comprising:
a presence sensor for sensing a direct physical attachment of the adapter to the asset;
a power sensor to sense voltage, or current, or voltage and current for detecting if the adapter is connected to a power source;
a power circuit for receiving power from the power supply cable and comprising a battery, to power the adapter; and
a transceiver for communicating wireless with a computer server;
an electronic data processor configured for:
   collecting data from said sensors;
recording or sending a notification of the presence sensor sensing the direct physical unattachment of the adapter from the asset.

In an embodiment, the presence sensor is a light detector arranged to be occluded by the asset when the adapter is in direct physical attachment of the adapter and the electronic data processor being further configured for detecting light as an indication that the direct physical unattachment of the adapter from the asset.

In an embodiment, the presence sensor is a pressure detector arranged to be pressed by the asset when the adapter is in direct physical attachment of the adapter and the electronic data processor being further configured for detecting absence of pressure as an indication that the direct physical unattachment of the adapter from the asset.

In an embodiment, the presence sensor is a Hall effect sensor arranged to detect the presence of a ground pin of the asset, when the adapter is in direct physical attachment and the electronic data processor being further configured for detecting the magnetic field as an indication that the direct physical unattachment of the adapter from the asset.

In an embodiment, the processing unit is further configured for recording or sending a notification of the adapter being disconnected from the power source.

In an embodiment, the adapter comprises a geolocation device for obtaining a location of the adapter.

In an embodiment, the electronic data processor being further configured for using the transceiver to receive beacon broadcasts and calculating a location of the adapter from the received beacon broadcasts.

In an embodiment, the electronic data processor being further configured for using the transceiver to transmit the location of the adapter.

In an embodiment, the disclosed device further comprises said power supply cable for connecting to a power socket.

In an embodiment, the power circuit comprises:
a power converter to power the adapter and, optionally the asset;
a backup battery to power the adapter; and
a power switch to switch the adapter between the power converter and the battery, depending on a power sensor output.

In an embodiment, the asset is a medical or residential portable or movable asset.

In an embodiment, the electronic data processor being further configured for using the transceiver for emitting periodically a wireless beacon signal, in particular the wireless beacon signal comprising an identification of the asset and/or a location of the adapter.

In an embodiment, the adapter further comprising vibration and/or temperature sensor.

In an embodiment, the wireless connection is selected from the following list: Bluetooth, UWB, Wi-Fi, LoRa, SigFox, GPS, or cellular. In an embodiment, the wireless connection for determining location of the device adapter is selected from the following list: Bluetooth, UWB, Wi-Fi, LoRa, GPS, or Cellular. In an embodiment, the wireless connection for communicating location and/or for communicating an indication of direct physical attachment status of the adapter to/from the asset, is selected from the following list: Bluetooth, Wi-Fi, LoRa, SigFox, or Cellular.

In an embodiment, the adapter comprises a satellite geolocation device for obtaining a location of the adapter.

In an embodiment, the electronic data processor is further configured to send a notification if the battery is reaching a low charge.

It is also disclosed a method for monitoring and location tracking of an electronic asset using an adapter for attaching between the asset and a power supply cable, said adapter comprising:
a presence sensor for sensing a direct physical attachment of the adapter to the asset;
a power sensor to sense voltage, or current, or voltage and current for detecting if the adapter is connected to a power source;
a power circuit for receiving power from the power supply cable and
comprising a battery, to power the adapter; and
a transceiver for communicating wireless with a computer server;
the method comprising using an electronic data processor for:
   collecting data from said sensors;
   recording or sending a notification of the presence sensor sensing the direct physical unattachment of the adapter from the asset.

### BRIEF DESCRIPTION OF THE DRAWINGS

The following figures provide preferred embodiments for illustrating the disclosure and should not be seen as limiting the scope of invention.
**Figure 1****:** Schematic representation of the general power connection of a device to a power socket.
**Figure 2****:** Schematic representation of an embodiment of an adapter to estimate device location.
**Figure 3****:** Schematic representation of an embodiment of a location adapter structure.
**Figure 4****:** Schematic representation of an embodiment of a location adapter working as a beacon.
**Figure 5A****:** Schematic representation of an embodiment of an adapter already embedded in the asset.
**Figure 5B****:** Schematic representation of an embodiment of an adapter already embedded in the cable.
**Figure 6****:** Schematic representation of an embodiment of an adapter with power supply detection and battery.
**Figure 7****:** Schematic representation of an embodiment of an adapter with asset connected detection.
**Figure 8****:** Schematic representation of an embodiment of the communication of an adapter with the central unit during disconnection.
**Figure 9****:** Schematic representation of an embodiment of the communication of an adapter with the central unit during connection recovery.

### DETAILED DESCRIPTION

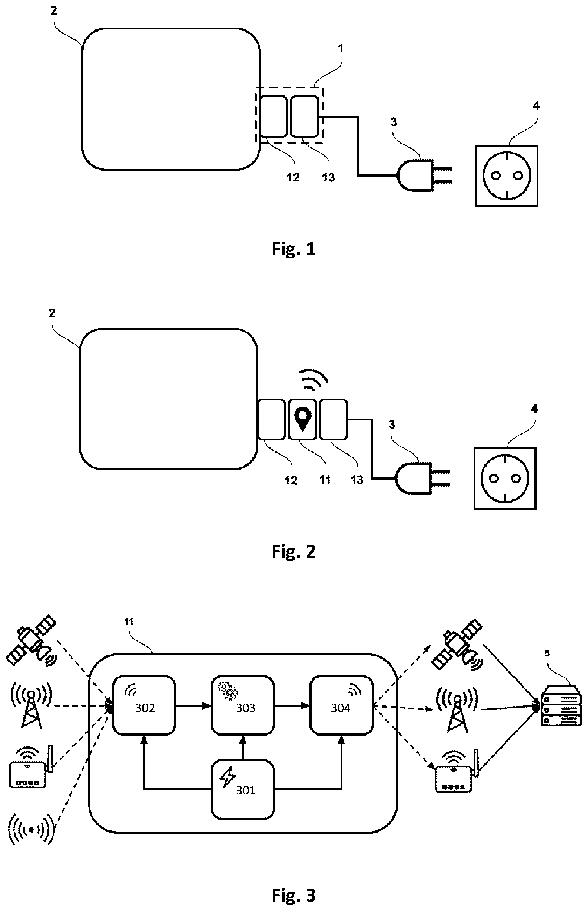

**Figure 1** shows a schematic representation of the general architecture of an asset with power supply. The asset (**2**) is powered by a cable with a power plug (**3**) connected to a power socket (**4**). There is typically an interface (**1**) based on some standard (e.g., IEC 60320) to connect the power supply cable to the asset. The standard is implemented through connectors on the asset side (**12**) and on the cable side (**13**).

**Figure 2** shows a schematic representation of an embodiment of an adapter to estimate device location depicting an additional block for asset monitoring. Besides the connector on the asset side (**12**) and the connector on the cable side (**13**), an adapter (**11**) with wireless connectivity is added between asset (**2**) and power supply cable which has a power plug (**3**) connected to a power socket (**4**). This adapter (**11**) contains two interfaces, one similar to the asset's connector and another similar to the cable's connector. This way, the adapter may be applied between the two connectors.

To monitor and communicate the location of the asset, this adapter (**11**) contains a set of blocks.

**Figure 3** shows a schematic representation of an embodiment of a location adapter structure depicting the blocks included in the adapter **(11).** There is a power unit **(301),** such as a transformer, responsible for powering the adapter **(11).** Its power supply comes from the cable attached to the adapter's connector, similar to the asset connector. The power is then converted to the specifications needed to supply the remaining blocks. The receiver block **(302)** represents one or more wireless interfaces used to communicate with external devices for location estimation purposes. This block may include one or more radio interfaces, such as: Bluetooth, UWB, Wi-Fi, LoRa, GPS, Cellular, etc. The combination of different technologies is used accordingly to answer indoor and outdoor scenarios, different location accuracy needs, etc.

The signals received from these wireless interfaces are then supplied to a processing unit **(303).**

In an embodiment, the adapter's location, and consequently the asset's location, is estimated inside this block, either partially or completely.

In another embodiment, raw data is processed and sent afterwards to a centralized unit that estimates location.

This depends on the location technology being used.

The adapter's location or the raw data needed to assess its location is then communicated wirelessly via an emitter unit **(304)** to a central unit **(5)** where the monitoring of assets is performed.

In an embodiment, this communication uses one or more communication technologies with different ranging capabilities or other characteristics that serve different use cases, e.g., Bluetooth, Wi-Fi, LoRa, SigFox, Cellular, etc.

In an embodiment where the same technology is used for location estimation and communication with the centralized unit, the receiver block **(302)** and the emitter block **(304)** represent the same interface.

In another embodiment, the adapter works as a beacon and the location estimation is completely performed outside of the adapter. This is a typical scenario in active RFID (Radio Frequency Identification) systems.

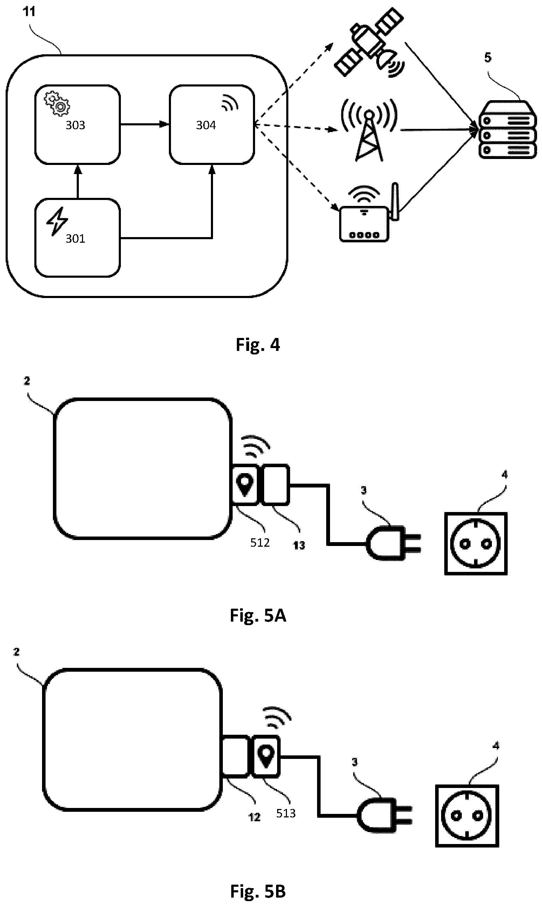

**Figure 4** shows a schematic representation of an embodiment of a location adapter working as a beacon. The processing unit **(303)** periodically sends a message through the emitter unit **(304),** such as radio interfaces, containing its identification and the signal may be received by receivers that forward the identification to central unit **(5)** together with other information needed to assess the adapter's **(11)** location, e.g., identification of the receiver, Received Signal Strength Indicator (RSSI) or angle of the received signal, etc.

In an embodiment, the adapter (11) is used embedded in the asset itself or in the cable.

**Figure 5A** shows a schematic representation of an embodiment of an adapter **(512)** is already embedded in the asset, and this eliminates the need for a separation between the adapter **(11)** and asset side **(12)** as shown before in **Figure 2****.** In this case, the adapter **(512)** works as the connector on the asset side.

**Figure 5B** shows a schematic representation of an embodiment of an adapter **(513)** is already embedded in the cable, working as the connector on the cable side.

In any of the three situations depicted in **Figures 2****,** **5A** and **5B****,** the adapter is always close to the asset being monitored, making the assessment of asset's location trustworthy, independently of additional cables that may be used to reach a power socket.

Another advantage of having this monitoring directly attached to the asset is the possibility of adding additional sensors to monitor operating conditions that only make sense near the asset or attached to it, e.g., vibration, temperature, etc.

In an embodiment, the monitoring device communicates through the same radio interfaces used to communicate location data.

In an embodiment, condition monitoring is used to assess asset's health, predict maintenance, or even validate that the asset was used within the indicated temperature range and was not subject to strong impacts.

There is another advantage when compared with monitoring hardware used on power sockets. Power consumption monitoring may be applied with the certainty that the measured values relate only to the asset being monitored.

In another embodiment, two additional functionalities are added to the adapter: notification of power socket disconnection and possibility of operating without power supply.

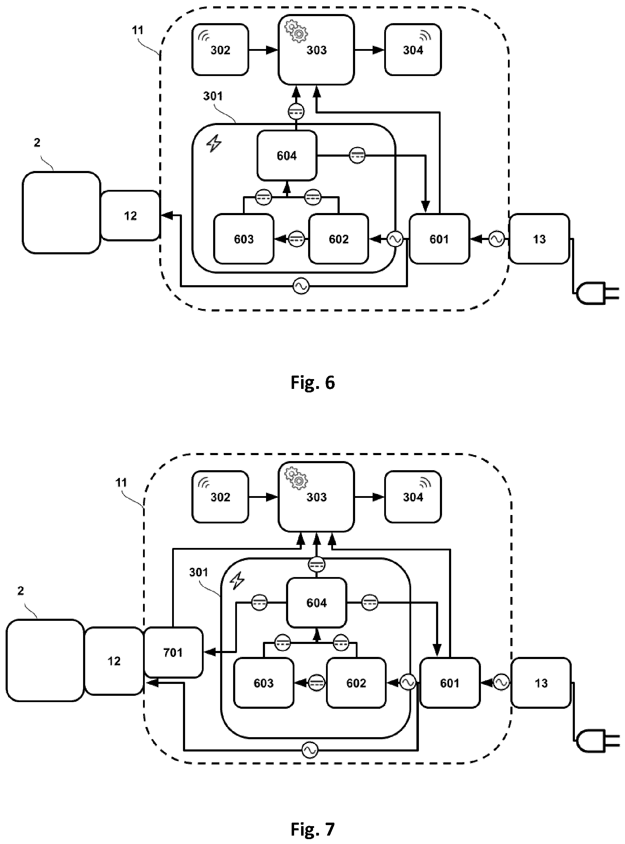

**Figure 6** shows a schematic representation of an embodiment of an adapter with power supply detection and battery, wherein the power unit **(301)** is inside the adapter **(11).** As before, the adapter **(11)** is supplied via the connector on the cable side **(13).** Inside the adapter **(11),** there is a module **(601)** that detects the connection to the power socket through voltage/current sensing or other process. This information is processed by the processing unit **(303)** and then sent to the central unit through the network interfaces **(304).** This enables the central unit to know in real time if the adapter is connected to the power socket.

In an embodiment, the central unit is notified when the device is disconnected from the power source. This block **(601)** also bypasses the power to the asset being powered **(2)** through the asset's connector **(12).**

The necessary power transformation is performed by the transformer represented by **(602).** This block is responsible for powering the remaining modules of the adapter when the adapter **(11)** is being supplied by the power socket.

In an embodiment, two extra blocks are added inside the power unit **(301)** to enable the adapter's operation after disconnection from the power socket. This is necessary not only to get notifications of the disconnection event, but also to enable asset monitoring, e.g., location, vibration, temperature, ..., even when the adapter is disconnected from the power socket.

Wherein **(603)** represents a battery that can power the adapter when the adapter is disconnected from the power socket. The power switch **(604)** is responsible for selecting the correct power source: if the adapter is connected to the power socket, the transformer **(602)** powers the adapter and charges the battery; if the adapter is disconnected from the power socket, the battery **(603)** powers the remaining blocks of the adapter.

This feature is particularly interesting when it is requested asset information even when it is powered off.

With the combination of indoor location technologies, e.g., Bluetooth, Wi-Fi, ..., and outdoor location technologies, e.g., GPS, ..., it is possible to know the location of the asset using the battery's **(603)** power supply. This is the case, for example, when the asset is being transported between facilities or moved inside the same facility.

**Figure 7** shows a schematic representation of an embodiment of an adapter with asset connected detection thus monitoring possible connection failures on the asset side. The block **(701)** for asset detection is added. This block is responsible for detecting the presence of a plugged asset. This may be applied, for example, using a type of sensor that detects the proximity or contact with the asset, such as an infrared sensor, pressure sensor, etc. Another alternative is the use of a Hall effect sensor to detect the presence of the ground pin of the asset, when connected to the adapter. In case of absence, the adapter knows that the connection to the asset was compromised, and a notification may be sent to the central unit through the network interfaces.

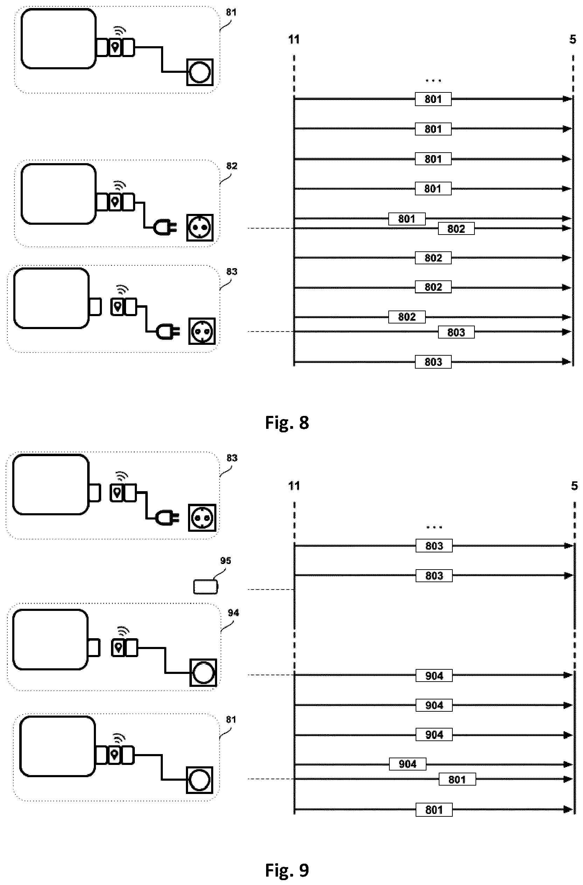

**Figure 8** shows a schematic representation of an embodiment of the communication of an adapter with the central unit (**5**) during power disconnection. Initially, the adapter is connected both to the power supply and to the asset (**81**). The adapter periodically sends a message to the central unit with the information that both asset and power socket connection are detected (**801**). This message also comprises location estimation of the asset, sensor data (temperature, vibration, etc.), battery status, etc. At a certain point in time, the adapter is disconnected from the power supply (**82**). Using the internal battery power, the adapter (**11**) starts sending a message stating that the asset is connected, but connection to power socket is not detected (**802**). Afterwards, the asset is also disconnected from the adapter (**83**). Using the internal battery power, the adapter (**11**) starts sending a message stating that both asset connection and power socket connection are not detected (**803**). Messages (**802**) and (**803**) also comprise the remaining information, such as, location estimation, sensor data and battery status, etc.

**Figure 9** shows a schematic representation of an embodiment of the communication of an adapter (**11**) with the central unit (**5**) during connection recovery. Initially, the adapter is not connected to the power socket, and the connection to the asset is also not detected (**83**). The adapter periodically sends this information to the central unit (**803**). Since the adapter is not being powered, the battery (**95**) drains out after some time (**85**). No messages are sent afterwards. However, since the messages comprise battery status, the system will know that the adapter (**11**) ran out of battery. When the adapter recovers connection to the power socket (**94**), the adapter immediately starts sending a status message informing that power socket connection is detected and asset is not detected (**904**). Finally, when the adapter is connected to the asset (**81)**, the message is updated to include this information (**801**). All the above messages (**803**, **904, 801**) also comprise other information, such as, location estimation, sensor data, battery status, etc.

If the adapter does not include an internal battery, messages will only be sent when the adapter is connected to the power socket and during the power socket disconnection.

The adapter may send these messages periodically or only when there is a state change (e.g., asset connected/disconnected, power socket connected/disconnected). When periodic messages are sent, the adapter may send immediately a message to notify the change of state when it occurs, regardless of the time of the last sent message. Moreover, depending on the communication technology being used (Bluetooth, Wi-Fi, LoRa, ...), message may not be sent immediately, but only when communication is possible.

In an embodiment, only when the adapter is disconnected from the power socket a notification is emitted, i.e., no notification is emitted if the adapter is disconnected on the asset side.

In an embodiment, whether the adapter is disconnected from the power socket or if the adapter is disconnected on the asset side a notification is emitted.

The term "comprising" whenever used in this document is intended to indicate the presence of stated features, integers, steps, components, but not to preclude the presence or addition of one or more other features, integers, steps, components, or groups thereof.

The disclosure should not be seen in any way restricted to the embodiments described and a person with ordinary skill in the art will foresee many possibilities to modifications thereof. The above-described embodiments are combinable.

The following claims further set out particular embodiments of the disclosure.

## Claims

1. Device for monitoring and location tracking of an electronic asset (2) comprising an adapter (11) for attaching between the asset (2) and a power supply cable, said adapter (11) comprising:
a presence sensor for sensing a direct physical attachment of the adapter (11) to the asset (2);
a power sensor (601) to sense voltage, or current, or voltage and current for detecting if the adapter (11) is connected to a power source (4);
a power circuit (301) for receiving power from the power supply cable and comprising a battery, to power the adapter (11); and
a transceiver for communicating wirelessly with a computer server;
an electronic data processor configured for:
collecting data from said sensors;
recording or sending a notification of the presence sensor sensing the direct physical unattachment of the adapter (11) from the asset (2).

2. Device according to the previous claim wherein the presence sensor is a light detector arranged to be occluded by the asset (2) when the adapter (11) is in direct physical attachment of the adapter (11) and the electronic data processor being further configured for detecting light as an indication that the direct physical unattachment of the adapter (11) from the asset (2).

3. Device according to claim 1 wherein the presence sensor is a pressure detector arranged to be pressed by the asset (2) when the adapter (11) is in direct physical attachment of the adapter (11) and the electronic data processor being further configured for detecting absence of pressure as an indication that the direct physical unattachment of the adapter (11) from the asset (2).

4. Device according to claim 1 wherein the presence sensor is a Hall effect sensor arranged to detect the presence of a ground pin of the asset (2), when the adapter (11) is in direct physical attachment and the electronic data processor being further configured for detecting the magnetic field as an indication that the direct physical unattachment of the adapter (11) from the asset (2).

5. Device according to any of the previous claims wherein the processing unit is further configured for recording or sending a notification of the adapter (11) being disconnected from the power source; preferably wherein the electronic data processor being further configured for using the transceiver to transmit the location of the adapter.

6. Device according to any of the previous claims wherein the adapter (11) further comprises a geolocation device for obtaining a location of the adapter; preferably wherein the electronic data processor being further configured for using the transceiver to transmit the location of the adapter.

7. Device according to any of the previous claims wherein the electronic data processor is further configured for using the transceiver to receive beacon broadcasts and calculating a location of the adapter from the received beacon broadcasts.

8. Device according to any of the previous claims wherein the power circuit (301) comprises:
a power converter (602) to power the adapter (11) and, optionally the asset (2); a backup battery (603) to power the adapter (11); and
a power switch (604) to switch the adapter (11) between the power converter (602) and the battery (603), depending on a power sensor (601) output.

9. Device according to any of the previous claims wherein the asset is a medical or residential portable or movable asset.

10. Device according to any of the previous claims wherein the electronic data processor being further configured for using the transceiver for emitting periodically a wireless beacon signal, in particular the wireless beacon signal comprising an identification of the asset and/or a location of the adapter.

11. Device according to any of the previous claims wherein the electronic data processor is further configured for using the transceiver for emitting periodically a wireless beacon signal configured for a receiver to determine the location of the adapter.

12. Device according to any of the previous claims, the adapter further comprising vibration and/or temperature sensor.

13. Device according to any of the previous claims wherein the adapter (11) comprises a satellite geolocation device for obtaining a location of the adapter.

14. Device according to any of the previous claim wherein the electronic data processor is further configured to send a notification if the battery is reaching a low charge.

15. Method for monitoring and location tracking of an electronic asset (2) using an adapter (11) for attaching between the asset (2) and a power supply cable, said adapter (11) comprising:
a presence sensor for sensing a direct physical attachment of the adapter (11) to the asset (2);
a power sensor (601) to sense voltage, or current, or voltage and current for detecting if the adapter (11) is connected to a power source (4);
a power circuit (301) for receiving power from the power supply cable and comprising a battery, to power the adapter (11); and
a transceiver for communicating wireless with a computer server;
the method comprising using an electronic data processor for:
collecting data from said sensors;
recording or sending a notification of the presence sensor sensing the direct physical unattachment of the adapter (11) from the asset (2).
